# EUROPÄISCHE PATENTSCHRIFT

(11) **EP 1 854 613 B1**
(45) Veröffentlichungstag und Bekanntmachung des Hinweises auf die Patenterteilung: **27.08.2014**
(21) Anmeldenummer: 07007679.9
(22) Anmeldetag: 16.04.2007
(51) Int. Cl.: B29C 47/60

(54) **Schneckenpresse sowie Förder- und Mischverfahren für die Verarbeitung thermoplastischer und nicht vernetzender Polymere**
Screw extruder and conveyor and mixing method for processing thermoplastic and non-crosslinking polymers
Presse à vis tout comme procédé d'alimentation et de mélange pour le traitement de polymères thermoplastiques et non réticulables

(30) Priorität: 11.05.2006 DE 102006022123
(43) Veröffentlichungstag der Anmeldung: 14.11.2007
(73) Patentinhaber: Reifenhäuser GmbH & Co. KG Maschinenfabrik, 53844 Troisdorf (DE)
(72) Erfinder: Hennes, Jochen, Dr., 60594 Frankfurt (DE)
(74) Vertreter: Farago, Peter Andreas

(56) Entgegenhaltungen:
- DE-A1- 3 843 576
- DE-A1- 10 000 938
- DE-B1- 2 023 910
- US-A- 5 539 004
- DATABASE WPI Week 198240 Thomson Scientific, London, GB; AN 1982-85368E XP002548792 & SU 887 213 B (SYNTH FIBRE MACH) 7. Dezember 1981 (1981-12-07)

## Beschreibung

Die Erfindung bezieht sich auf eine Schneckenpresse für die Verarbeitung thermoplastischer und nicht vernetzender Polymere, deren Förderschnecke eine Förderzone und eine Mischzone mit mindestens einem sich vom Schneckengrund zur Zylinderwand erstreckenden Mischring aufweist, der mit mindestens einer Durchtrittsöffnung versehen ist, sowie auf ein Förder- und Mischverfahren mit einer Schneckenpresse.

Eine Schneckenpresse dieser Art ist aus der DE 2 023 910 bekannt. Dort verlaufen Durchtrittsöffnungen abwechselnd schräg vom Schneckengrund zu einem zylindernahen Bereich und umgekehrt. Trotz dieses großen konstruktiven Aufwandes ist die Homogenisierung der Schmelze nicht zufriedenstellend, was insbesondere auf die Ausbildung derjenigen Durchtrittsöffnungen zurückzuführen ist, die vom zylindernahen Bereich zum Schneckengrund führen. Die Schmelze wird dabei von einem Bereich mit hoher Umfangsgeschwindigkeit in einen Bereich mit sehr geringer Umfangsgeschwindigkeit am Schneckengrund befördert, was einer guten Durchmischung und Homogenisierung entgegensteht. In der Praxis wird eine solche Ausgestaltung als "Kreuzlochmischteil" mit Dichtspalt bezeichnet.

Die DE 100 00 938 A1 zeigt einen Rotor in einem Gehäuse mit einem Ringpaket aus Mischringen und Teilungsringen. Die Mischringe haben anströmseitig Nuten, welche jeweils zu einem axial verlaufenden Kanal im Umfangsbereich der Mischringe hin verlaufen. Die Teilungsringe weisen am Umfang ebenfalls Längsnuten auf. Die Mischnuten und die Längsnuten werden jeweils durch die Gehäusewand des Gehäuses begrenzt. Ein Transport der Kunststoffschmelze erfolgt durch die diversen Nuten und Bohrungen.

Die DE 38 43 576 A1 zeigt eine Transportschnecke mit Kreuzlochmischteil in einem Extruder. An der Transportschnecke sind ringförmige Mischerelemente vorhanden, welche zahlreiche Bohrungen aufweisen, die in einem Winkel zur Längsachse des Extruders von der Anströmseite zur Abströmseite der Ringe führen. Die Schmelze wird durch diese Bohrungen vermischt und teilweise gefördert.

Eine weitere Förderschnecke ist aus der US 4,015,833 bekannt.

Die DE 2 019 522 A1 zeigt eine Schneckenpresse mit einer überströmbaren Ringwulst.

Weitere Mischvorrichtungen sind bekannt aus der DE 39 10 132 A1 und aus der DE 32 42 708 A1.

Das Buch "Der Einschnecken-Extruder", herausgegeben vom vdi-Verlag (ISBN 3-18-234203-7), beschreibt getrennte Misch- und Scherzonen.

In Prospekten der Windmöller & Hölscher KG, Lengerich, mit den Titeln "VAREX Blown Film Lines - modular and universal for single, multi-layer and barrier film" (2001) bzw. "EXTRUDER Die Hochleistungs-Blasfolienanlage für Dünnfolie, Tragtaschenfolie, Sackfolie und Schrumpfhaubenfolie" (1973) werden weitere Kreuzlochmischteile gezeigt.

Eine derartige Vorrichtung gemäß dem Oberbegriff des Anspruchs 1 und ein Verfahren gemäß dem Oberbegriff des Anspruchs 9 ist durch US 5539004 offenbart

Aufgabe der Erfindung ist es, die Homogenisierung im Mischbereich einer Schneckenpresse zu verbessern.

Diese Aufgabe wird mit einer Schneckenpresse sowie mit einem Förder- und Mischverfahren gemäß den unabhängigen Patentansprüchen gelöst.

Die Unteransprüche beschreiben optionale, vorteilhafte Ausführungsformen.

Der Erfindung liegt die Erkenntnis zugrunde, dass bei einer Förderung der Schmelze ausgehend von einem Bereich nahe des Schneckengrundes auf der Zuströmseite eines Mischringes in einen zylindernahen Bereich die Umfangsgeschwindigkeit der aus der Durchtrittsöffnung austretenden Schmelze schlagartig erhöht wird, was zu einer guten Verteilung und damit Homogenisierung beiträgt. Ein wesentliches Grundprinzip der Erfindung besteht darin, dass durch die Durchtrittsöffnungen die Schmelze vom Schneckengrund zur Zylinderwand beschleunigt wird. Die austretenden Ströme werden dann durch die Drehbewegung des Mischringes untereinander in gewisser Weise verdrillt, so dass ein besonders starker Mischeffekt und damit eine besonders gute Homogenisierung eintritt.

Dadurch, dass zwischen der äußeren Umfangswand des Mischrings und der Zylinderwand ein Scherspalt ausgebildet ist, wird die Mischwirkung der geförderten Schmelze erheblich erhöht.

Dadurch, dass der Scherspalt an der Zuströmseite des Mischringes abgedichtet ist gemäß dem kennzeichnenden Teil des Anspruchs 1, zwingt der Mischring jedoch zunächst praktisch die gesamte Schmelze durch die Durchtrittsöffnungen.

Dadurch, dass zumindest eine Durchtrittsöffnung, insbesondere eine Nut oder eine Bohrung, zumindest teilweise in den Scherspalt hinein mündet, wird im Betrieb der Schneckenpresse das Fördergut zwangsweise in den Scherspalt gebracht. Erst hierdurch erreicht der Scherspalt seine vorgesehene Wirkung.

Begrifflich sei erläutert, dass ein Scherspalt in der Praxis meist eine radiale Spaltbreite von mehr als 0,3 mm aufweist, meist von mehr als 0,5 mm. Der Erfinder hat außerdem Prototypen im Betrieb genommen, bei welchen die radiale Breite des Scherspalts etwa 1/50 der Extrudergröße ausmacht, nämlich bei einem 50 mm-Extruder eine Spaltbreite von etwa 1 mm hat und bei einem 100 mm-Extruder eine Spaltbreite von etwa 2 mm hat.

Demgegenüber haben Dichtspalte eine kleinere radiale Breite. Ein üblicher Wert für die Spaltbreite eines Dichtspalts liegt bei etwa einem Zehntel mm.

Es kann vorteilhaft sein, wenn der Scherspalt in Fließrichtung in seiner Höhe variiert, so dass an unterschiedlichen Stellen unterschiedliche Geschwindigkeiten herrschen, was stets zu einer besseren Vermischung führt.

Eine weitere vorteilhafte Ausgestaltung der Erfindung sieht vor, dass die Durchtrittsöffnung eine Nut aufweist, die an der Zuströmseite des Mischringes offen und an der Abströmseite in den Scherspalt mündet. Durch diese Ausbildung wird die in dieser offenen Nut radial nach außen geförderte Schmelze in dem Scherspalt, in den sie ausmündet, besonders stark zerteilt und beschleunigt, was in Umfangsrichtung und auch in Schneckenförderrichtung zu einer guten Durchmischung führt.

Dieser Effekt wird auch im wesentlichen dann erreicht, wenn die Durchtrittsöffnung eine Nut aufweist, die an der Zuströmseite des Mischringes offen und an der Abströmseite teilweise verschlossen ist, das heißt, ein Teil der in der Nut fließenden Schmelze gerät in den Endbereich des Scherspaltes.

Um den Mischeffekt innerhalb der Durchtrittsöffnung der jeweiligen Schmelze anpassen zu können und auch den Mischeffekt zu variieren, ist es vorteilhaft, wenn in weiterer Ausgestaltung der Erfindung der Querschnitt der Durchtrittsöffnung sowohl hinsichtlich Größe als auch hinsichtlich Formgestaltung in Fließrichtung variiert. Hierdurch können Beschleunigungskräfte und Verzögerungskräfte abwechselnd auftreten, was den Mischeffekt fördert.

Dabei ist es häufig vorteilhaft, wenn der Querschnitt der Durchtrittsöffnung in Fließrichtung abnimmt, was die Fließgeschwindigkeit der Schmelze in der Durchtrittsöffnung in Fließrichtung erhöht.

Ein Mischring für eine Schneckenpresse weist in der Regel nicht nur eine einzige Durchtrittsöffnung auf, sondern in der Regel mehrere Durchtrittsöffnungen. Ausgehend von einer solchen Ausbildung ist es vorteilhaft, dass bei mehreren über den Umfang eines Mischringes verteilten Durchtrittsöffnungen diese über den Umfang gesehen hinsichtlich Querschnitt und Formgestaltung variieren, so dass die aus den Durchtrittsöffnungen austretenden Teilströme mit unterschiedlichen Geschwindigkeiten an der Abströmseite des Mischringes miteinander in Berührung kommen, was die Durchmischung des gesamten Volumens vorteilhaft beeinflusst.

Es versteht sich, dass auch Nuten und Bohrungen gemeinsam zum Einsatz kommen können. Außerdem versteht es sich, dass auch anders gestaltete Bohrungen als gemäß der vorliegenden Erfindung gemeinsam mit erfindungsgemäßen Durchtrittsöffnungen zum Einsatz kommen können.

Eine häufige Ausgestaltung nach der Erfindung sieht vor, dass die Durchtrittsöffnung in Fließrichtung gesehen unter einem spitzen Winkel zur Schneckenachse verläuft. Es kann aber auch vorteilhaft sein, wenn die Durchtrittsöffnung in Fließrichtung gesehen unter einem rechten Winkel zur Schneckenachse verläuft, insbesondere dann, wenn die Mündung der Durchtrittsöffnung im Bereich eines sich in Fließrichtung erweiternden Scherspaltes liegt. Dabei wird die aus der Durchtrittsöffnung austretende Schmelze aufgrund der hohen Umfangsgeschwindigkeit im Bereich des Scherspaltes sehr stark zerteilt bzw. verrieben.

Wenn in weiterer Ausgestaltung der Erfindung die Durchtrittsöffnung als Bohrung ausgebildet ist, so hat dies vor allem Vorteile bei der Herstellung des Mischrings, da eine Bohrung in der Regel leichter auszuführen ist als andere Querschnittsformen der Durchtrittsöffnungen.

Die Bohrungen können an der Abströmseite des Mischringes, im Scherspalt oder teilweise im Scherspalt und teilweise in der Abströmseite des Mischringes enden. Mindestens eine Bohrung muss zumindest teilweise im Scherspalt enden.

Wenn in weiterer Ausgestaltung der Erfindung die Wandbegrenzungen an der Zuströmseite und der Abströmseite einer Mischringes unter einem vom rechten Winkel abweichenden Winkel zur Symmetrieachse der Schneckenpresse verlaufen, so können auch hier Einflüsse auf das Mischverhalten eintreten.

Bei Anordnung mehrerer Mischringe bei einer Schneckenpresse können diese Mischringe individuell wie vorstehend beschrieben gestaltet sein, das heißt jeder Mischring kann einen vom nachfolgenden Mischring abweichenden Aufbau aufweisen. Selbstverständlich ist jede Art der Ausbildung der einzelnen Mischringe unabhängig von den benachbarten Mischringen möglich. Es können sich aber auch gleichartige Mischringe abwechseln.

Die Erfindung wird nachfolgend anhand mehrerer Ausführungsbeispiele näher erläutert. In der Zeichnung zeigen
- Fig. 1: einen Schnitt durch eine Zylinderanordnung einer Schneckenpresse mit einer Schneckenansicht; und
- Fig. 2-8: verschiedene Ausführungsformen eines Mischringes in Schnittdarstellung, die nicht Teil der Erfindung sind, und
- Fig. 9: den erfindungsgemäßen Mischring mit Abdichtung.

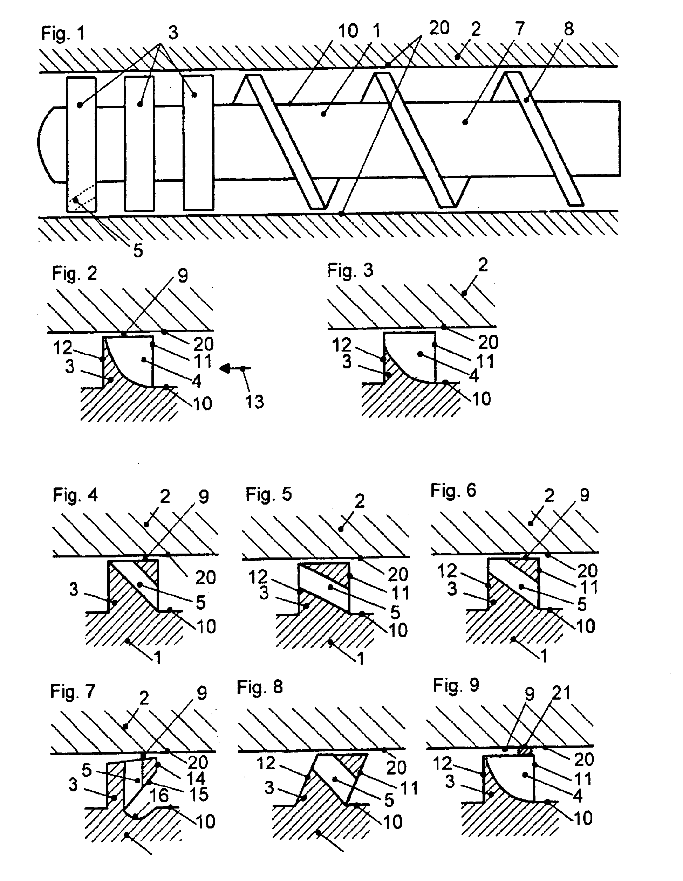

Wie aus Fig. 1 ersichtlich ist in einem Zylinder 2 einer Schneckenpresse eine Schnecke 1 angeordnet, die drei Mischringe 3 und eine Förderzone 7 mit einzelnen Schneckengängen 8 aufweist. Die Mischringe 3 erstrecken sich ausgehend von einem Schneckengrund 10 bis auf einen Scherspalt 9 an eine Zylinderwand 20 des Zylinders 2 heran. Die Spaltbreite des Scherspalts 9 kann beispielsweise etwa 1 mm in radialem Ausmaß betragen.

Entsprechend Fig. 2 weist ein Mischring 3 eine Nut 4 auf, die vom Schneckengrund 10 ausgeht und bis zum Scherspalt 9 reicht. Die Nut an einer Anströmseite 11 des Mischringes 3 ist vollständig offen, während eine Abströmseite 12 bis auf den Scherspalt 9 geschlossen ist. Mit 13 ist eine Fließrichtung der Schmelze bezeichnet.

Bei der Ausgestaltung nach Fig. 3 ist die in radialer Richtung eingefräste Nut 4 an der Anströmseite 11 vollständig offen und an der Abströmseite 12 teilweise geschlossen, so dass hier die Schmelze einen größeren Austrittsquerschnitt aufweist als bei der Ausgestaltung nach Fig. 2, wo nur der Scherspalt 9 als Austrittsöffnung verbleibt.

Mit dem Bezugszeichen 4 ist zwar im speziellen Falle eine Nut bezeichnet, dieses Bezugszeichen steht aber generell für eine Durchtrittsöffnung beliebiger Gestaltung.

Bei den Ausführungsformen nach den Figuren 4 bis 8 ist mindestens eine Durchtrittsöffnung als Bohrung 5 ausgebildet.

Fig. 4 zeigt eine schräge Anordnung der Bohrung 5 ausgehend vom Schneckengrund 10 bis in den Scherspalt 9. Diese Bohrung endet also im Umfangsbereich des Mischringes 3.

Bei der Darstellung nach Fig. 5 endet die Bohrung 5 an der Abströmseite 12. Auch hier geht die Bohrung vom Schneckengrund 10 an der Anströmseite 11 aus. Es sei jedoch darauf hingewiesen, dass die in Figur 5 dargestellte Bohrung 5 eine zusätzliche Bohrung darstellt, welche am Mischring 3 ausgebildet ist. Nicht dargestellt ist am selben Mischring eine Durchtrittsöffnung vorhanden, welche zumindest teilweise in den Scherspalt mündet.

Bei Fig. 6 endet die Bohrung teilweise an der Abströmseite 12 und teilweise im Scherspalt 9, während auch hier der Beginn der Bohrung 5 am Schneckengrund 10 an der Anströmseite 11 liegt.

Die Abdichtung kann konstruktiv beispielweise dadurch erreicht werden, dass der in Figur 6 ganz oben rechts dargestellte geschnittene Bereich, welcher den Strömungskanal 5 zum Scherspalt 9 hin begrenzt, radial nach außen vorgerückt wird oder mit einem radial nach außen reichenden Vorsprung versehen wird, sodass der Scherspalt 9 zur Anströmseite 11 hin sehr schmal ausgeführt ist, insbesondere sogar vollständig abgedichtet. Wenn der Spalt an dieser Stelle stark verengt wird, fungiert er als Dichtspalt. Bei einer solchen Ausgestaltung ist - in Strömungsrichtung der Schmelze gesehen, also von der Anströmseite 11 hin zur Abströmseite 12 - zunächst ein Dichtspalt (nicht dargestellt) am Umfang des Mischrings vorhanden, in weiterem Verlauf dann der Scherspalt 9, in welchen hinein die Durchtrittsöffnung mündet.

Fig. 7 zeigt eine Anströmseite, die im oberen Bereich einen rechtwinklig zur Schneckenachse verlaufenden Teil 14 und einen schräg zur Schneckenachse verlaufenden Teil 15 aufweist. Der Schneckengrund ist mit einer Einkerbung 16 versehen, von der die Bohrung 5 rechtwinklig zur Schneckenachse ausgeht und im Scherspalt 9 endet, der in Strömungsrichtung gesehen eine Erweiterung 6 aufweist.

Bei der Darstellung nach Fig. 8 ist der Mischring 3 schräg zur Schneckenachse angestellt, das heißt die Anströmseite 11 weist zur Symmetrieachse der Schnecke einen spitzen Winkel auf, während die Abströmseite 12 einen stumpfen Winkel zur Schneckensymmetrieachse aufweist. Die Bohrung 5 verläuft bei diesem Ausführungsbeispiel ausgehend vom Schneckengrund 10 in schräge Richtung zur Zylinderwand 20, wobei ein Teil der Bohrung im Scherspalt 9 und ein Teil der Bohrung an der Abströmseite 12 endet.

Die Figur 9 zeigt eine Ausbildung des Mischringes entsprechend Figur 2, wobei an der Anströmseite der etwas größere Scherspalt gegenüber dem Scherspalt 9 bei Figur 2 durch einen Dichtring 21 so verschlossen ist, dass für die Schmelze ein kürzerer Scherspalt 9 verbleibt.

## Patentansprüche

1. Schneckenpresse für die Verarbeitung thermoplastischer und nicht vernetzender Polymere,
mit einer Förderschnecke (1)
mit einer Förderzone (7)
und einer Mischzone mit einem Mischring (3), welcher sich von einem Schneckengrund (10) zu einer Zylinderwand (20) der Schneckenpresse erstreckt,
wobei der Mischring (3) Durchtrittsöffnungen (4, 5) aufweist,
wobei
zwischen einer äußeren Umfangswand des Mischrings (3) und der Zylinderwand (20) ein Scherspalt (9) ausgebildet ist und dass zumindest eine Durchtrittsöffnung (4,5) vom Schneckengrund (10) oder dessen Nähe aus verläuft
und zumindest teilweise in den Scherspalt (9) mündet, ***dadurch gekennzeichnet, dass*** der Scherspalt (9) an einer Zuströmseite (11) des Mischrings (3) abgedichtet ist.

2. Schneckenpresse nach Anspruch 1, ***dadurch gekennzeichnet, dass*** die Durchtrittsöffnung (4) eine Nut (5) aufweist, die an einer Zuströmseite (11) des Mischringes (3) offen ist und an einer Abströmseite (12) in den Scherspalt mündet.

3. Schneckenpresse nach einem der vorhergehenden Ansprüche, ***dadurch gekennzeichnet, dass*** die Durchtrittsöffnung (4) eine Nut (5) aufweist, die an einer Zuströmseite (11) des Mischringes (3) offen und an einer Abströmseite (12) teilweise verschlossen ist.

4. Schneckenpresse nach einem der vorhergehenden Ansprüche, ***dadurch gekennzeichnet, dass*** bei Ausbildung mehrerer über einen Umfang eines Mischringes (3) verteilter Durchtrittsöffnungen (4) diese über den Umfang gesehen hinsichtlich Querschnitt und Formgestaltung variieren.

5. Schneckenpresse nach einem der vorhergehenden Ansprüche, ***dadurch gekennzeichnet, dass*** eine Durchtrittsöffnung als Bohrung (5) ausgebildet ist.

6. Schneckenpresse nach Anspruch 5, ***dadurch gekennzeichnet, dass*** die Bohrung (5) in den Scherspalt (9) mündet.

7. Schneckenpresse nach Anspruch 5, ***dadurch gekennzeichnet, dass*** die Bohrung (5) teilweise im Scherspalt (9) und teilweise an der Abströmseite (12) des Mischringes (3) mündet.

8. Schneckenpresse nach einem der vorhergehenden Ansprüche, ***dadurch gekennzeichnet, dass*** bei Anordnung mehrerer Mischringe (3) bei einer Schneckenpresse (1) diese Mischringe (3) unterschiedlich nach einem der vorhergehenden Ansprüche gestaltet sind.

9. Verfahren zum Fördern und Mischen eines thermoplastischen und nicht vernetzenden Polymers, wobei zum Fördern und Mischen eine Förderschnecke (1) mit einer Förderzone (7) und einer Mischzone mit einem Mischring (3) eingesetzt wird, wobei sich der Mischring (3) von einem Schneckengrund (10) zu einer Zylinderwand (20) der Schneckenpresse erstreckt und wobei das Vermischen der Polymere **dadurch** erfolgt, dass diese durch Durchtrittsöffnungen (4, 5) am Mischring (3) gefördert werden, wobei die Polymere durch mindestens eine Durchtrittsöffnung hin zu einem Scherspalt gefördert werden und axial zumindest einen Teil des Mischrings (3) entlang des Scherspalts (9) passieren, welcher zwischen einer äußeren Umfangswand des Mischrings (3) und der Zylinderwand (29) ausgebildet ist, **dadurch gekennzeichnet, dass** eine Abdichtung des Scherspalts (9) an einer Zuströmseite (11) des Mischrings (3) die Polymere beim Zuströmen zunächst in die Durchtrittsöffnungen (4, 5) lenken und die Polymere erst nach Durchströmen der Durchtrittsöffnungen (4, 5) in den Scherspalt (9) gelangen.

## Claims

1. A screw press for processing thermoplastic and not crosslinking polymers, with a conveyor screw (1)
with a conveyance area (7)
and with a mixing area with a mixing ring (3), which extends from a screw bottom (10) to a cylinder wall (20) of the screw press, wherein the mixing ring (3) has apertures (4, 5),
wherein
a shearing gap (9) is formed between an outer circumferential wall of the mixing ring (3) and the cylinder wall (20)
and at least one aperture (4, 5) extends away from the screw bottom (10) or its vicinity
and at least partially opens out into the shearing gap (9), ***characterized in that***
the shearing gap (9) is sealed off on an inflow side (11) of the mixing ring (3).

2. The screw press according to claim 1, ***characterized in that*** the aperture (4) has a groove (5) that is open on an inflow side (11) of the mixing ring (3) and opens out into the shearing gap on an outflow side (12).

3. The screw press according to one of the afore-mentioned claims, ***characterized in that*** the aperture (4) has a groove (5) that is open on an inflow side (11) of the mixing ring (3) and is partially closed on an outflow side (12).

4. The screw press according to one of the afore-mentioned claims, ***characterized in that**,* when several apertures (4) distributed along the circumference of a mixing ring (3) are formed, their cross-section and shape varies along the circumference.

5. The screw press according to one of the afore-mentioned claims, ***characterized in that*** an aperture is configured as a borehole (5).

6. The screw press according to claim 5, ***characterized in that*** the borehole (5) opens out into the shearing gap (9).

7. The screw press according to claim 5, ***characterized in that*** the borehole (5) opens out partially into the shearing gap (9) and partially into the outflow side (12) of the mixing ring (3).

8. The screw press according to one of the afore-mentioned claims, ***characterized in that*** when disposing several mixing rings (3) in a screw press (1), these mixing rings (3) are shaped differently according to one of the afore-mentioned claims.

9. A method for conveying and mixing a thermoplastic and not crosslinked polymer, wherein a conveyor screw (1) with a conveyance area (7) and a mixing area with a mixing ring (3) are used for conveying and mixing, wherein the mixing ring (3) extends from a screw bottom (10) to a cylinder wall (20) of the screw press and wherein the mixing of the polymers is carried out by conveying the polymers through apertures (4, 5) in the mixing ring (3), wherein the polymers are conveyed through at least one aperture to a shearing gap and axially pass at least a part of the mixing ring (3) along the shearing gap (9), which is formed between an outer circumferential wall of the mixing ring (3) and the cylinder wall (29), ***characterized in that*** a sealing of the shearing gap (9) on the inflow side (11) of the mixing ring (3) guides the inflowing polymers at first into the apertures (4, 5) and that the polymers reach the shearing gap (9) only after flowing through the apertures (4, 5).

## Revendications

1. Presse à vis pour la transformation de polymères thermoplastiques et non réticulants,
avec une vis de convoyage (1)
avec une zone de convoyage (7)
et une zone de mélange avec un anneau de mélange (3) qui s'étend d'un fond de la vis (10) jusqu'à une paroi de cylindre (20) de la presse à vis,
où l'anneau de mélange (3) comporte des ouvertures de passage (4, 5),
où
un interstice de cisaillement (9) est formé entre une paroi circonférentielle extérieure de l'anneau de mélange (3) et la paroi de cylindre (20) et au moins une ouverture de passage (4, 5) s'étend à partir du fond de la vis (10) ou ses alentours
et débouche au moins partiellement dans l'interstice de cisaillement (9), ***caractérisée en ce que***
l'interstice de cisaillement (9) est fermé hermétiquement du côté d'une arrivée d'écoulement (11) dans l'anneau mélangeur (3).

2. Presse à vis selon la revendication 1, ***caractérisée en ce que*** l'ouverture de passage (4) comporte une rainure (5) qui est ouverte du côté d'une arrivée d'écoulement (11) de l'anneau mélangeur (3) et débouche dans l'interstice de cisaillement du côté d'une sortie d'écoulement (12).

3. Presse à vis selon l'une quelconque des revendications précédentes, ***caractérisée en ce que*** l'ouverture de passage (4) comporte une rainure (5), qui est ouverte du côté d'une arrivée d'écoulement (11) de l'anneau mélangeur (3) et est partiellement fermée du côté d'une sortie d'écoulement (12).

4. Presse à vis selon l'une quelconque des revendications précédentes, ***caractérisée en ce que*** lorsque plusieurs ouvertures de passage (4) sont formées de manière à être distribuées le long d'une circonférence de l'anneau mélangeur (3), leur section transversale et leur forme varie le long de la circonférence.

5. Presse à vis selon l'une quelconque des revendications précédentes, ***caractérisée en ce* qu'**une ouverture de passage est un trou percé (5).

6. Presse à vis selon la revendication 5, ***caractérisée en ce que*** le trou percé (5) débouche dans l'interstice de cisaillement (9).

7. Presse à vis selon la revendication 5, ***caractérisée en ce que*** le trou percé (5) débouche partiellement dans l'interstice de cisaillement (9) et partiellement du côté de la sortie d'écoulement (12) de l'anneau de mélange (3).

8. Presse selon l'une quelconque des revendications précédentes, ***caractérisée en ce que*** lorsque plusieurs anneaux de mélange (3) sont disposés dans une presse à vis (1), ces anneaux de mélange (3) sont formés différemment selon l'une quelconque des revendications précédentes.

9. Méthode pour convoyer et mélanger un polymère thermoplastique et non réticulant, où une vis de convoyage (1) avec une zone de convoyage (7) et une zone de mélange avec un anneau de mélange (3) sont utilisés pour le transport et le mélange, où l'anneau de mélange (3) s'étend depuis un fond de la vis (10) jusqu'à une paroi de cylindre (20) de la presse à vis et où le mélange des polymères s'effectue en les convoyant à travers des ouvertures de passage (4, 5) dans l'anneau de mélange (3), où les polymères sont convoyés à travers au moins une ouverture de passage jusqu'à un interstice de cisaillement et dépassent axialement au moins une partie de l'anneau de mélange (3) le long de l'interstice de cisaillement (9) qui est formé entre une paroi circonférentielle extérieure de l'anneau de mélange (3) et la paroi de cylindre (29), ***caractérisée en ce qu'**un* étanchement de l'interstice de cisaillement (9) du côté d'une arrivée d'écoulement (11) dans l'anneau de mélange (3) oriente d'abord les polymères dans les ouvertures de passage (4, 5) lors de leur arrivée et que les polymères n'atteignent l'interstice de cisaillement (9) qu'après avoir traversé les ouvertures de passage (4, 5).
